# EUROPÄISCHE PATENTSCHRIFT

(11) **EP 1 664 147 B1**
(45) Veröffentlichungstag und Bekanntmachung des Hinweises auf die Patenterteilung: **02.05.2007**
(21) Anmeldenummer: 04765051.0
(22) Anmeldetag: 10.09.2004
(51) Int. Cl.: C08G 18/63, B29C 51/00

(54) **AUTOTEPPICH UMFASSEND EINEN POLYURETHAN-THERMOFORMWEICHSCHAUMSTOFF**
CARPET FOR VEHICLE FLOOR COMPRISING A THERMOFORMED POLYURETHANE SOFT FOAM
TAPIS DE PLANCHER DE VEHICULE COMPRENANT UNE MOUSSE SOUPLE THERMOFORMABLE EN POLYURETHANNE

(30) Priorität: 16.09.2003 DE 10343122
(43) Veröffentlichungstag der Anmeldung: 07.06.2006
(73) Patentinhaber: BASF Aktiengesellschaft, 67056 Ludwigshafen (DE)
(72) Erfinder: BAUER, Stephan, 49179 Ostercappeln (DE); WAGNER, Klaus, 49419 Wagenfeld (DE); LUTTER, Heinz-Dieter, 49448 Lemförde (DE); MEYER, Stefan, 49661 Cloppenburg (DE)
(86) Internationale Anmeldenummer: PCT/EP2004/010122
(87) Internationale Veröffentlichungsnummer: WO 2005/033169

(56) Entgegenhaltungen:
- EP-A- 0 269 346
- EP-A- 0 312 920
- EP-A- 0 897 940
- EP-A- 1 247 827
- US-A- 4 482 582

## Beschreibung

Die Erfindung betrifft einen Autoteppich umfassend einen Thermoformweichschaumstoff auf Polyurethanbasis erhältlich durch Umsetzung von Polyisocyanaten mit Polymerpolyolen zu einem Polyurethanweichschaumstoff und anschließendem irrevesiblen Thermoformen des erhaltenen Weichschaumstoffs bei Temperaturen oberhalb der Glastemperatur der thermoplastischen Polymeren, sowie die Verwendung von Polymerpolyolen zur Herstellung eines Polyurethan-Weichschaumstoffs, welcher in Formen bei Temperaturen von 120°C bis 250°C irreversibel verformbar ist.

Geformte Weichschaumstoffe auf Polyurethanbasis finden beispielsweise Verwendung in der Automobilindustrie, insbesondere zur Herstellung von Automobilteppichen.

So offenbart EP 269 346 einen thermoformbaren Schaumstoff auf Basis eines Polyisocyanats und einer Mischung aus Polypropylenglycol und einem Polymerpolyolen, und dessen Verwendung als Belag, insbesondere als Teppich.

US 4 482 582 offenbart ein Verfahren zur Herstellung eines Polyurethanschaumstoffs mit einer Dichte von 32 g/l durch Umsetzen einer 50/50 Mischung eines Polyols und eines Polymerpolyols und TDI. Der erhaltene Schaumstoff kann durch thermoformen weiterverarbeitet werden.

Diese Formweichschaumstoffe sind im allgemeinen jedoch mit dem Nachteil behaftet, dass die Formteile kleinere Formschaumstoffstörungen aufweisen, die in der Regel durch das nicht ausreichendes Fließverhalten der Polyurethanmischung in der Form verursacht werden.

Aufgabe der Erfindung war es daher, geformte Weiefrschaumstoffe, insbesondere große Formteile in Abmessungen von circa 2 x 2 Meter für die Verwendung als Automobilteppiche, bereit zu stellen, die oben genannte Nachteile nicht aufweisen.

Die Aufgabe konnte durch die Verwendung von Polymerpolyolen zur Herstellung von Polyurethan-Thermoformweichschaumstoffen gelöst werden.

Gegenstand der Erfindung ist daher ein Polyurethan-Thermoformweichschaumstoff, erhältlich durch Umsetzung von
i) Polyisocyanaten mit
ii) Polyolen mit einem Gehalt an thermoplastischen Polymeren von 2 bis 50 Gew.-%,
zu einem Polyurethanweichschaumstoff, bevorzugt einem Polyurethanblockweichschaumstoff, und anschließendem irreversiblen Thermoformen des erhaltenen Weich schaumstoffs bei Temperaturen oberhalb der Glastemperatur der thermoplastischen Polymeren zu der gewünschten Form.

Weiterhin ist Gegenstand der Erfindung ein Verfahren zur Herstellung eines Polyurethan-Thermoformweichschaumstoffs umfassend die Schritte:
A) Umsetzung von
   i) Polyisocyanaten mit
   ii) Polyolen mit einem Gehalt an thermoplastischen Polymeren von 2 bis 50 Gew.-%,
   zu einem Polyurethanweichschaumstoff, bevorzugt einem
   Polyurethanblockweichschaumstoff, und anschließend
B) irreversibles Thermoformen des erhaltenen Weichschaumstoffs bei Temperaturen oberhalb der Glastemperatur des thermoplastischen Polymeren.

Schließlich ist Gegenstand der Erfindung die Verwendung von Polymerpolyolen zur Herstellung eines Polyurethan-Weichschaumstoffs, welcher in Formen bei Temperaturen von 120 °C bis 250 °C irreversibel verformbar ist.

Bei den für die erfindungsgemäßen Thermoformschaumstoffe und für das erfindungsgemäße Verfahren verwendeten Polyisocyanate i) handelt es sich um auf dem Polyurethangebiet üblichen Isocyanate. In Betracht kommen im allgemeinen aliphatische, cycloaliphatische, arylaliphatische und aromatische mehrwertige Isocyanate. Bevorzugt werden die technisch gut zugänglichen, gegebenenfalls Urethangruppen aufweisenden, aromatischen Di- und Polyisocyanate wie 2,4- und 2,6-Toluylendiisocyanat, sowie beliebige Gemische dieser Isomeren, 2,2'- und 2,4'- und 4,4'-Diphenylmethandiisocyanat sowie beliebige Gemische dieser Isomeren, Mischungen aus 2,2'- 2,4'-, 4,4'-Diphenylmethan-diisocyanaten und Polyphenyl-polymethylen-polyisocyanaten (Roh-MDI) und Gemische aus Toluylen-diisocyanaten und Roh-MDI. Besonders bevorzugt sind MDI-Präpolymere.

Bei den für die erfindungsgemäßen Thermoformschaumstoffe und für das erfindungsgemäße Verfahren verwendeten Polyolen mit einem Gehalt an thermoplastischen Polymeren von 2 bis 50 Gew.-% ii) handelt es sich um auf dem Polyurethangebiet übliche Polymerpolyole, die auch häufig als Graft-Polyole bezeichnet werden. Diese Polymerpolyole sind allgemein bekannt und kommerziell erhältlich und werden üblicherweise durch radikalische Polymerisation von geeigneten olefonischen Monomeren, beispielsweise Styrol, Acrylnitril, Acrylaten und/oder Acrylamid, in einem als Profpgrundlage dienenden Polyetherol hergestellt. Die Seitenketten entstehen im allgemeinen durch Übertragung der Radikale von wachsenden Polymerketten auf Polyetherole. Das Polymer-Polyol enthält neben dem Propfcopolymerisaten überweiegend die Homopolymere der Olefine, dispergiert in unverändertem Polyetherol.

In einer bevorzugten Ausführungsform werden als Monomere Acrylnitril, Styrol, insbesondere Styrol und Acrylnitril im Verhältnis zwischen 1:1 bis 3:1, sowie gegebenenfalls in Gegenwart weiterer Monomerer, eines Makromers, eines Moderators und unter Einsatz eines Radikal-Initiators, meist Azo- oder Peroxidverbindungen, in einem Polyetherol bzw. Polyesterol als kontinuierlicher Phase hergestellt.

Als Trägerpolyetherole kommen üblicherweise Verbindungen mit einer Hydroxylgruppen-Funktionalität von 1,8 bis 8, vorzugsweise 2 bis 3, einer Hydroxylzahl von 20 bis 100 mg KOH/g, bevorzugt 25 bis 70 mg KOH/g, hergestellt durch anionische, kationische oder neutrale Polymerisation (DMC) von Alkylenoxiden, bevorzugt Ethylen- und/oder Propylenoxid in Betracht.

Makromere, auch als Stabilisatoren bezeichnet, sind lineare oder verzweigte Polyole mit zahlenmittleren Molekulargewichten von bis zu 2000 g/mol, die mindestens eine endständige, reaktionsfähige olefinische ungesättigte Gruppe enthalten. Die ethylenisch ungesättigte Gruppe kann über Reaktion mit Anhydriden (Maleinsäureanhydrid, Fumarsäure), Acrylat- und Methacrylat-Derivaten sowie Isocyanat-Derivaten,wie 3-Isopropenyl-1,1-dimethylbenzyl-isocyanate, Isocyanato-ethylmethacrylate, an ein bereits bestehendes Polyol eingefügt werden.

Während der radikalischen Polymerisation werden die Makromere mit in die Copolymerkette eingebaut. Dadurch bilden sich Blockcopolymere mit einem Polyether- und einem Poly-acryfnitril-styrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und a-(Benzoyloxy)styren.

Zur Initiierung der radikalischen Polymersisation werden üblicherweise Peroxid- oder Azo-Verbindungen, wie Dibenzoyl-peroxide, Lauroylperoxide, t-Amylperoxy-2-ethyl-hexanoate, Di-t-butylperoxide, Diisopropyl peroxide carbonate, t-Butyl peroxy-2-ethylhexanoate, t-Butylperpivalate, t-Butylpemeo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile) (AMBN), 1,1'-Azobis(1-cyclohexanecarbonitrile), eingesetzt. DerAnteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Die Polymerpolyole können allein oder im Gemisch mit herkömmlichen Polyolen, insbesondere Polyetherpolyolen, verwendet werden. Wichtig ist, dass die resultierende Polyolmischung ii) mindestens ein Polymerpolyol enthält und einen Gehalt an thermoplastischen Polymeren von 2 Gew.-% bis 50 Gew.-%, bevorzugt 5 Gew.-% bis 45 Gew.-%, bezogen auf das Gesamtgewicht der Polyolmischung, aufweist.

Neben den Komponenten Polyisocyanate i) und Polyole ii) können zur Herstellung der erfindungsgemäßen Schaumstoffe und zur Durchführung des erfindungsgemäßen Verfahrens noch folgende weitere, dem Fachmann bekannten optionalen Komponenten eingesetzt werden:
iii) Katalysatoren
iv) Stabilisatoren
v) Treibmittel, bevorzugt Wasser und/oder CO₂, und
vi) Zusatzstoffe, wie Flammschutzmittel, Farbstoffe, Pigmente, Füllstoffe und dergleichen.

Zur Herstellung der erfindungsgemäßen Polyurethane werden die organischen Polyisocyanate i) den Polyolen ii), gegebenenfalls im Beisein der genannten Komponenten iii) bis vi) zur Reaktion gebracht.

Bei der Herstellung der erfindungsgemäßen Polyurethane werden das Isocyanat und die Polyolkomponente zumeist in einer solchen Menge zusammengebracht, dass das Äquivalenzverhältnis von Isocyanatgruppen zur Summe der aktiven Wasserstoffatome 1: 0,7 bis 1:1,25, vorzugsweise 1: 1,05 bis 1: 1,2 beträgt.

Die Komponenten i) und ii) und gegebenenfalls iii) bis vi) werden in einer bevorzugten Ausführungsform so gewählt, dass der resultierende Polyurethanweichschaumstoff eine Stauchhärtung nach DIN EN ISO 3386 bei 40% Verformung von 0,1 kPa bis 15 kPa, bevorzugt von1 kPa bis 8 kPa aufweist.

Des weiteren werden die Komponenten i) und ii) und gegebenenfalls iii) bis vi) in einer bevorzugten Ausführungsform so gewählt, dass es sich bei dem resultierendes Polyurethanweichschaumstoff um einen elastischen Polyurethanweichschaumstoff handelt, d.h. um einen Schaumstoff, der nach kurzzeitiger Verformung (15 Sekunden im Druckversuch gemäß DIN 53577) um 50 % seiner Dicke nach 10 Minuten keine bleibende Verformung über 2 % seiner Ausgangsdicke aufweist. Ferner liegt in einer bevorzugten Ausführungsform die Rückprallelastizität des Polyurethanweichschaumstoffes zwischen 30 und 80 %, bevorzugt zwischen 40 und 70 % nach DIN EN ISO 8301.

Ferner werden im allgemeinen die Komponenten i) und ii) und gegebenenfalls iii) bis vi) so gewählt, dass der resultierende Polyurethanweichschaumstoff eine Dichte nach DIN EN ISO 845 von 10 bis 150 g/l, bevorzugt von 20 bis 50 g/l aufweist. Ferner weist er im allgemeinen eine Luftdurchlässigkeit von 20 bis 250 dm³/min, bevorzugt von 50 bis 150 dm³/min, gemessen nach DIN EN ISO 7231, auf.

Die oben genannten physikalischen Parameter betreffen sowohl den durch Umsetzung der Komponenten i) und ii) und gegebenenfalls iii) bis vi) erhaltenen Polyurethanweichschaumstoff, der bevorzugt in Form eines Polyurethanblockweichschaumstoffes erhalten wird, als auch den anschließend durch Thermoformung erhaltenen Polyurethan-Thermoformweichschaumstoff.

Im Schritt B) des erfindungsgemäßen Verfahrens erfolgt irreversibles Thermoformen des in Schritt A) erhaltenen Weichschaumstoffs, bevorzugt Blockweichschaumstoffes,bei Temperaturen oberhalb der Glastemperatur der thermoplastischen Polymeren.

Im allgemeinen haben sich hierbei Temperaturen von 100 bis 250 °C, bevorzugt von 120 bis 200°C als geeignet erwiesen.

Die Presszeit im Thermoformvorgang beträgt im allgemeinen 0,1 bis 10 Minuten, bevorzugt 0,2 bis 3 Minuten.

Unter irreversiblem Formen ist im Rahmen dieser Erfindung zu verstehen, dass sich die Dicke des thermoverformten Polyurethanschaumstoffs im Temperaturbereich von - 70 bis + 70°C ohne Druckeinwirkung und bei konstanten Temperatur und Feuchtigkeit in einem Zeitraum von einem Jahr an einer beliebigen Stelle des thermoverformte Polyurethanschaumstoffes nicht mehr verändert als 5%, bevorzugt 2%. Ferner erfolgt keine mit dem Auge erkennbare Änderung der durch den Thermoverformprozess gegebene Struktur.

Neben dem erfindungsgemäßen Polyurethan-Thermoformweichschaumstoff und dem erfindungsgemäßen Verfahren ist ein weiterer Gegenstand der Erfindung die Verwendung von Polymerpolyolen zur Herstellung eines Polyurethan-Weichschaumstoffs, welcher in Formen bei Temperaturen von 100°C bis 250°C, bevorzugt bei 120 bis 200°C. irreversibel verformbar ist.

In einer bevorzugten Ausführungsform werden die oben genannten, als Komponente ii) näher erläuterten Polyole mit einem Gehalt an thermoplastischen Polymeren von 2 bis 50 Gew.-% verwendet. Diese werden im allgemeinen mit den oben genannten Komponenten i) und gegebenenfalls iii) bis vi) wie oben beschrieben zur Reaktion gebracht.

In einer bevorzugten Ausführungsform werden die Polymerpolyole zur Herstellung eines Polyurethan-Weichschaumstoffs verwendet, welcher in Form eines Autoteppichs irreversibel verformbar ist.

Die Erfindung soll durch-nachfolgende Beispiele veranschaulicht werden.

### Beispiele

Bei den Beispielen 1 bis 3 handelt es sich um Handversuche, wobei die Schaumstoffe durch zur Reaktion bringen der Bestandteile gemäß Tabelle 1 hergestellt wurden. Die physikalischen Eigenschaften der resultierenden Polyurethan-Weichschaumstoffe sind in Tabelle 2 wiedergegeben.

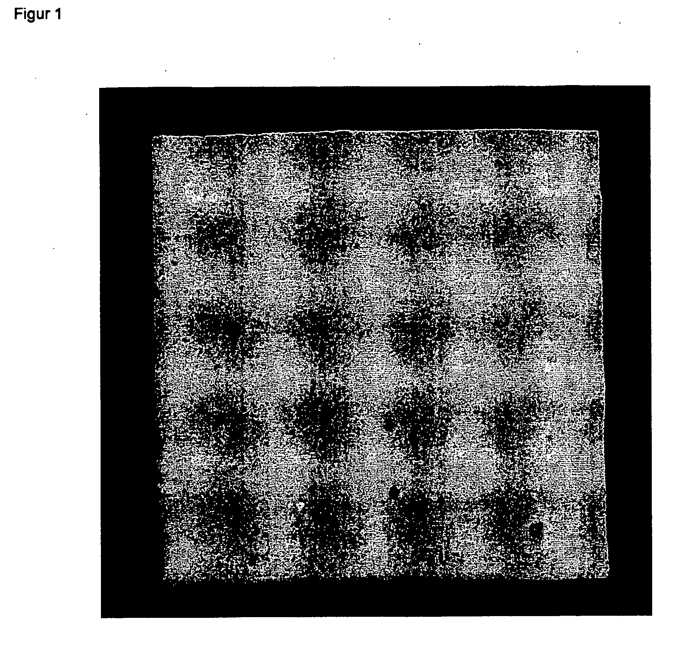

Zur Prüfung der irreversiblen Thermoformbarkeit wurden die Polyurethan-Weichschaumstoffe aus den Beispielen 1 bis 3 in einem Waffeleisen bei 200°C verformt. Eine Abbildung der erhaltenen Thermoformweichschaumstoffe zeigt Figur 1.

**Tabelle 1**

| **Formulierung** | **Bsp. 1** | **2** | **3** |
|---|---|---|---|
| Lupranol^{®} 2092 | 60,00 | 60,00 | 60,00 |
| Lupranol^{®} 4890-15 (Polymerpolyol mit 16 % Feststoffgehalt) | 40,00 | 40,00 | 40,00 |
| Wasser | 4,00 | 4,60 | 5,00 |
| Lupragen^{®} API | 0,10 | 0,10 | 0,25 |
| Lupragen^{®} N203 | 0,25 | 0,25 | 0,25 |
| Lupragen^{®} N206 | 0,10 | 0,10 | 0,10 |
| Tegostab^{®} B 8616 | 0,50 | 0,50 | 0,40 |
| Lupranat^{®} VP 9309 | 79,7 | 90,30 | 97,4 |
| Index | 110 | 110 | 110 |

| | | | |
|---|---|---|---|
| Lupranol^{®} 2092 ist ein reaktives Standardpolyol mit einer Hydroxylzahl von 28 mgKOH/g und einem mittleren Molekulargewicht von 6000 g/mol von der BASF AG Lupranol^{®} 4890-15 ist ein reaktives Polymerpolyol, mit einem Feststoffanteil von ca. 15% und einer Hydroxylzahl von 29 mgKOH/g von der BASF AG Lupragen^{®} API ist N(3-Aminopropyl)imidazol von der BASF AG Lupragen^{®} N203 ist eine 33%ige Lösung von Triethylendiamin in Ethylenglykol von der BASF AG Lupragen^{®} N206 ist eine 70%ige Lösung von Bis(2-dimethylaminoethyl)ether in Dipropylenglykol von der BASF AG Tegostab^{®} B 8616 ein Silikonstabilisator von der Fa. Goldschmidt AG Lupranat^{®} VP 9309 ein MDI-Prepolymer mit einer NCO-Gehalt von 29,1 % und einer Viskosität von 70 mPa·s von der BASF AG | | | |

**Tabelle 2**

| **Prüfmerkmal** | **1** | **2** | **3** |
|---|---|---|---|
| Eindruckhärtezahl 25% in N nach DIN EN ISO 2439xxxxxx | 93 | 120 | 130 |
| Eindruckhärtezahl 40% in N | 128 | 168 | 193 |
| Eindruckhärtezahl 65% in N | 280 | 365 | 481 |
| Stauchhärte 25% in kPa nach DIN EN ISO 3386 | 3,0 | 3,9 | 4,7 |
| Stauchhärte 40% in kPa | 3,9 | 5,1 | 6,5 |
| Stauchhärte 65% in kPa | 9,9 | 13,3 | 18,5 |
| Raumgewicht in kg/m³ nach DIN EN ISO 845 | 29,4 | 29,3 | 28,2 |
| Druckverformungsrest in % nach DIN EN ISO 1856 | 6,5 | 8,5 | 30,2 |
| Zugfestigkeit in kPa nach DIN EN ISO 1798xxx | 140 | 165 | 128 |
| Bruchdehnung in % nach DIN EN ISO 1798 | 101 | 97 | 91 |
| Luftdurchlässigkeit in dm³/min nach DIN EN ISO 7231 | 75 | 71 | 40 |
| Rückprallelastizität in % nach DIN EN ISO 8307 | 45 | 45 | 38 |

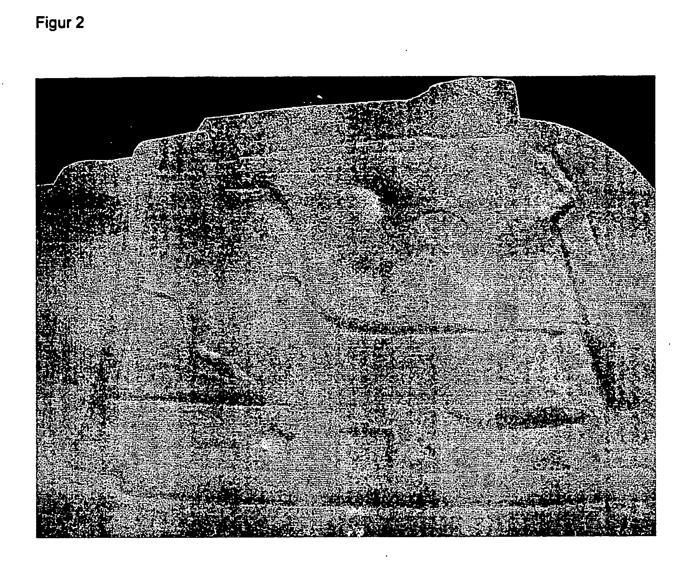

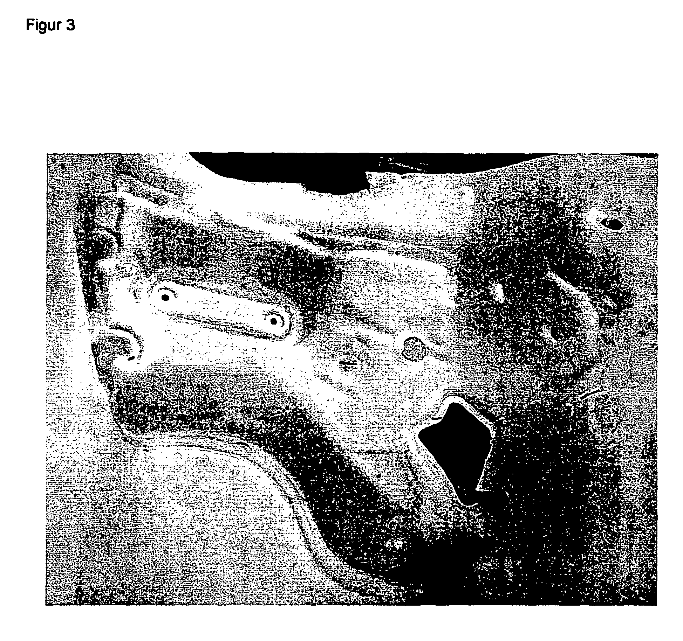

Bei den Beispielen 4 und 5 handelt es sich um Maschinenversuche, wobei die Schaumstoffe durch zur Reaktion bringen der Bestandteile gemäß Tabelle 3 hergestellt wurden.
Zur Prüfung der irreversiblen Thermoformbarkeit wurden die Polyurethan-Weichschaumstoffe aus den Beispielen 4 und 5 im Werkzeug Colorado Bodenverkleidung zu Autoteppich-Platinen (40 mm) bei ca.180 °C und 90 s Presszeit verformt. Die Platinen mussten vor dem vollständigen Zusammenfahren ca. 15 s vorgewärmt werden, um ein Einreißen zu vermindern (die Presse darf nicht "im freien Fall" zugefahren werden). Der Schrumpf wurde zu ca. 1 % bestimmt (10 mm auf 1000mm).
Eine Abbildung der erhaltenen Thermoformweichschaumstoffe in Form von Autoteppichen zeigen die Figuren 2 und 3.

## Patentansprüche

1. Autoteppich, umfassend einen Polyurethan-Thermoformweichschaumstoff, erhältlich durch Umsetzung von zuminest
i) Polyisocyanaten mit
ii) Polyolen mit einem Gehalt an thermoplastischen Polymeren von 2 bis 50 Gew.-%, erhältlich durch radikalische Polymerisation von geeigneten olefinischen Monomeren in einem als Pfropfgrundlage dienenden Polyetherol
zu einem Polyurethanweichschaumstoff mit einer Dichte von 10 bis 150 g/l nach DIN EN ISO 845 und anschließendem irrevesiblen Thermoformen des erhaltenen Weichschaumstoffs bei Temperaturen oberhalb der Glastemperatur der thermoplastischen Polymeren.

2. Autoteppich nach Anspruch 1, **dadurch gekennzeichnet, dass** der Polyurethan-Thermoformweichschaumstoff eine Stauchhärte nach DIN EN ISO 3386 bei 40% Verformung von 0,1 kPa bis 15 kPa und bevorzugt eine Rückprallelastizität von 30 bis 80 nach DIN EN ISO 8301 aufweist.

3. Verfahren zur Herstellung eines Autoteppichs, umfassend einen Polyurethan-Thermoformweichschaumstoff, umfassend die Schritte:
A) Umsetzung von zumindest
i) Polyisocyanaten mit
ii) Polyolen mit einem Gehalt an thermoplastischen Polymeren von 2 bis 50 Gew.-%, erhältlich durch radikalische Polymerisation von geeigneten olefinischen Monomeren in einem als Pfropfgrundlage dienenden Polyetherol
zu einem Polyurethanweichschaumstoff mit einer Dichte von 10 bis 150 g/l nach DIN EN ISO 845 und anschließend
B) irreversibles Thermoformen des erhaltenen Weichschaumstoffs bei Temperaturen oberhalb der Glastemperatur des thermoplastischen Polymeren zu einem Autoteppich.

4. Verfahren nach Anspruch 3, **dadurch gekennzeichnet, dass** die Thermoformtemperatur 120 bis 250°C beträgt.

## Claims

1. An automobile carpet, comprising a thermoformed flexible polyurethane foam, obtainable via reaction of at least
i) polyisocyanates with
ii) polyols having from 2 to 50% by weight content of thermoplastic polymers, obtainable via free-radical polymerization of suitable olefinic monomers in a polyetherol serving as graft base, to give a flexible polyurethane foam whose density is from 10 to 150 g/l to DIN EN ISO 845, followed by irreversible thermoforming of the resultant flexible foam at temperatures above the glass transition temperature of the thermoplastic polymers.

2. The automobile carpet according to claim 1, wherein the compressive strength of the thermoformed flexible polyurethane foam to DIN EN ISO 3386 at 40% deformation is from 0.1 to 15 kPa, and its impact resilience is preferably from 30 to 80 to DIN EN ISO 8301.

3. A process for producing an automobile carpet, comprising a thermoformed flexible polyurethane foam, comprising the steps of:
A) reaction of at least
i) polyisocyanates with
ii) polyols with from 2 to 50% by weight content of thermoplastic polymers, obtainable via free-radical polymerization of suitable olefinic monomers in a polyetherol serving as graft base,
to give a flexible polyurethane foam whose density is from 10 to 150 g/l to DIN EN ISO 845, and then
B) irreversible thermoforming of the resultant flexible foam at temperatures above the glass transition temperature of the thermoplastic polymer to give an automobile carpet.

4. The process according to claim 3, wherein the thermoforming temperature is from 120 to 250°C.

## Revendications

1. Tapis de véhicule, comprenant une mousse souple thermoformée de polyuréthanne, que l'on peut obtenir par réaction au moins
i) de polyisocyanates avec
ii)des polyols ayant une teneur en polymères thermoplastiques de 2 à 50 % en poids, que l'on peut obtenir par polymérisation radicalaire de monomères oléfiniques appropriés dans un polyéthérol servant de base de greffage
pour former une mousse souple de polyuréthanne ayant une masse volumique de 10 à 150 g/l selon la norme DIN EN ISO 845, et par thermoformage irréversible ultérieur de la mousse souple obtenue à des températures supérieures à la température de transition vitreuse des polymères thermoplastiques.

2. Tapis de véhicule suivant la revendication 1, **caractérisé en ce que** la mousse souple thermoformée de polyuréthanne présente une dureté à l'écrasement selon la norme DIN EN ISO 3386 de 0,1 kPa à 15 kPa lors d'une déformation de 40 % et de préférence une élasticité de rebondissement de 30 à 80 selon la norme DIN EN ISO 8301.

3. Procédé de préparation d'un tapis de véhicule, comprenant une mousse souple thermoformée de polyuréthanne, comprenant les étapes :
A) de réaction d'au moins
i) des polyisocyanates avec
ii)des polyols ayant une teneur en polymères thermoplastiques de 2 à 50 % en poids, que l'on peut obtenir par polymérisation radicalaire de monomères oléfiniques appropriés dans un polyéthérol servant de base de greffage
pour former une mousse souple de polyuréthanne ayant une masse volumique de 10 à 150 g/l selon la norme DIN EN ISO 845, et ensuite
B) de thermoformage irréversible de la mousse souple obtenue à des températures supérieures à la température de transition vitreuse du polymère thermoplastique pour former un tapis de véhicule.

4. Procédé suivant la revendication 3, **caractérisé en ce que** la température de thermoformage est de 120 à 250°C.
